# FASCICULE DE BREVET EUROPEEN

(11) **EP 1 125 259 B1**
(45) Date de publication et mention de la délivrance du brevet: **25.06.2003**
(21) Numéro de dépôt: 99950871.6
(22) Date de dépôt: 28.10.1999
(51) Int. Cl.: G07F 7/10, G06F 12/14

(54) **DISPOSITIF ET PROCEDE POUR LA SECURISATION D'UN CIRCUIT INTEGRE**
VORRICHTUNG UND VERFAHREN ZUR SICHERUNG EINER INTEGRIERTEN SCHALTUNG
DEVICE FOR AND METHOD MAKING SECURE AN INTEGRATED CIRCUIT

(30) Priorité: 29.10.1998 FR 9813606
(43) Date de publication de la demande: 22.08.2001
(73) Titulaire: SCHLUMBERGER Systèmes, 92120 Montrouge (FR)
(72) Inventeur: GERBAULT, Eric, F-94230 Cachan (FR)
(74) Mandataire: den Braber, Gerard Paul
(86) Numéro de dépôt international: FR9902639
(87) Numéro de publication internationale: WO00026869

(56) Documents cités:
- EP-A- 0 595 720
- EP-A- 0 681 233
- US-A- 4 847 803
- US-A- 5 452 431

## Description

La présente invention concerne un dispositif à circuit intégré contenant une zone mémoire qui comprend, d'une part, une mémoire de données et une mémoire de programme, et, d'autre part, un programme comportant N blocs Bi (i = 1,..., N) de code. Elle concerne également un procédé de sécurisation d'un tel dispositif.

Ledit dispositif à circuit intégré est le plus souvent utilisé dans des applications dans lesquelles la sécurité du stockage et du traitement d'informations confidentielles est essentielle. Il s'agit par exemple de cartes à composants électroniques destinées à des applications concernant le domaine de la santé, de la téléphonie mobile, ou encore, à des applications relatives au domaine bancaire.

Lesdites cartes comportent un circuit intégré contenant de manière classique un élément de commande (par exemple une unité centrale de traitement ou CPU) qui gère et distribue, par l'intermédiaire de lignes de bus, des informations de données ou d'adresses stockées dans la zone mémoire desdites cartes. Ledit circuit intégré contenant lesdites lignes de bus consomme du courant électrique notamment lorsque lesdites lignes de bus, sont amenées à transporter l'information logique 1.

Aussi, l'intensité dudit courant électrique consommé par une carte à composants électroniques varie en fonction du temps en particulier à cause des différentes valeurs de données ou d'adresses transitant sur lesdites lignes de bus de la carte. Le suivi de ladite intensité en fonction du temps constitue une signature électrique de l'activité de la carte et, par suite, une analyse de ladite signature est révélatrice de ladite activité. Ainsi, grâce à une analyse de la signature électrique, les fraudeurs peuvent par exemple aisément suivre un déroulement d'opérations contenues dans les différents blocs de code du programme de ladite carte et ils peuvent en conséquence avoir accès à des secrets contenus dans cette carte.

En vue de rendre plus complexe l'analyse de signature électrique pour les fraudeurs, l'état de la technique propose des dispositifs annexes permettant d'engendrer des signaux parasites venant s'ajouter à la signature électrique de l'activité de ladite carte à composants électroniques. Bien qu'ils rendent plus délicate l'analyse de la signature électrique, lesdits dispositifs annexes consomment du temps car ils monopolisent certaines ressources de ladite carte, ressources déjà utilisées pour l'exécution d'autres opérations qui sont propres à la carte et de plus ils consomment davantage de courant car ils comportent des composants électroniques qui nécessitent du courant électrique pour fonctionner.

Aussi un problème technique à résoudre par l'objet de la présente invention est de proposer un dispositif à circuit intégré contenant une zone mémoire qui comprend, d'une part, une mémoire de données et une mémoire de programme, et, d'autre part, un programme comportant N blocs Bi (i = 1,..., N) de code, ainsi qu'un procédé de sécurisation d'un tel dispositif, qui permettent d'obtenir une signature électrique de telle sorte que ladite signature soit difficile à analyser, et qui par ailleurs ne nécessitent pas une consommation élevée en courant électrique et en temps due par exemple à des dispositifs annexes monopolisant les propres ressources dudit dispositif.

Une solution au problème technique posé se caractérise, selon un premier objet de la présente invention, en ce que ladite zone mémoire dudit dispositif à circuit intégré comporte M copies Cj (j = 1,..., M) de x blocs Bi (1 ≤ x ≤ N) de code du programme, lesdites copies étant situées à différentes adresses de ladite zone mémoire, et en ce que ledit dispositif comprend un moyen de sélection servant à sélectionner de façon aléatoire une copie Cj d'au moins un des x blocs Bi, comme copie de bloc à utiliser lors de l'exécution dudit programme.

Selon un second objet de la présente invention, cette solution se caractérise en ce que le procédé de sécurisation comporte les étapes consistant à :
- créer, dans ladite zone mémoire, M copies Ci (j = 1,..., M) de x blocs Bi (1 ≤ x ≤ N) de code du programme, lesdites copies étant situées à différentes adresses de ladite zone mémoire,
- sélectionner de façon aléatoire une copie Cj d'au moins un des x blocs Bi, comme copie de bloc à utiliser lors de l'exécution dudit programme.

Ainsi, comme on le verra en détail plus loin, le dispositif de l'invention permet de contrer les fraudeurs en rendant très difficile l'analyse d'une signature électrique, par lesdits fraudeurs, en exploitant le fait que ladite signature électrique est fonction notamment des valeurs transitant sur lesdites lignes de bus dudit dispositif.

La description qui va suivre au regard des dessins annexés, donnés à titre d'exemples non limitatifs, fera bien comprendre en quoi consiste l'invention et comment elle peut être réalisée.

La figure 1 est un schéma d'un dispositif à circuit intégré, une carte à composants électroniques par exemple.

La figure 2 est un schéma d'une zone mémoire de la carte de la figure 1.

La figure 3 est un schéma de lignes de bus de la carte de la figure 1.

La figure 4 est schéma de la zone mémoire de la figure 2 limité au seul bloc de code Bi.

La figure 5 est un schéma montrant un adressage d'un bloc de code et de ses copies situés dans la carte de la figure 1.

La figure 6 est un schéma montrant une répartition d'un bloc de code et de ses copies dans la zone mémoire de la figure 2.

La figure 7 est un schéma montrant une autre répartition d'un bloc de code et de ses copies dans la zone mémoire de la figure 2.

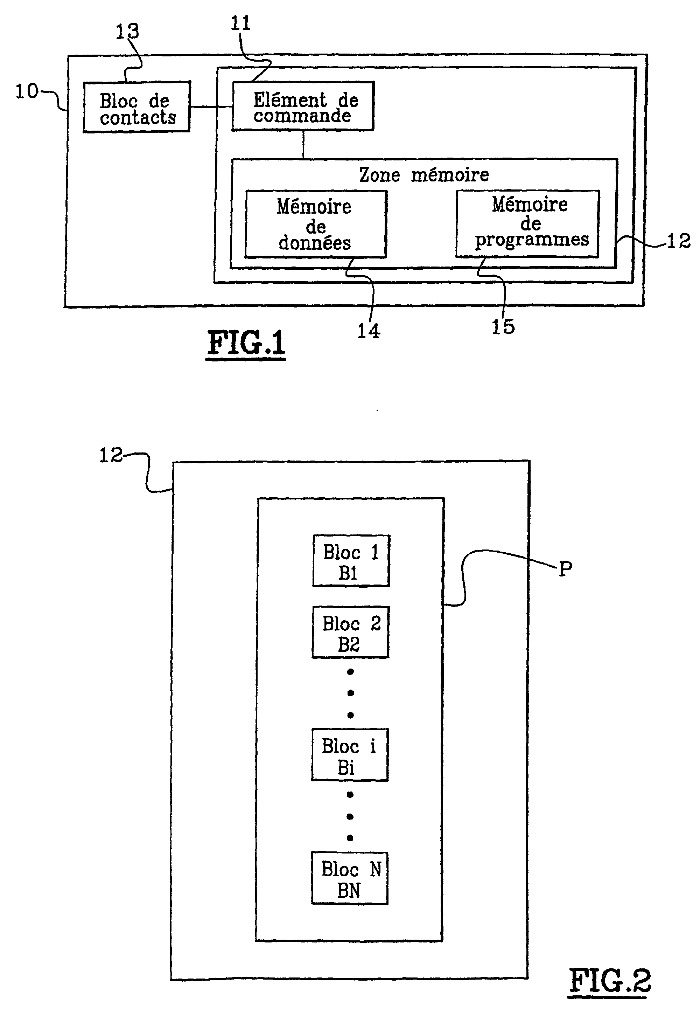

Sur la figure 1 est représenté un dispositif 10 à circuit intégré par exemple une carte à composants électroniques.

Cette carte 10 contient un élément 11 de commande (par exemple une unité centrale de traitement ou CPU), une zone mémoire 12 contenant une mémoire 14 de données et une mémoire 15 de programme, et un bloc 13 de contacts destiné à une connexion électrique avec par exemple un connecteur d'un lecteur de cartes .

Ladite zone mémoire 12 est représentée sur la figure 2. Elle contient un programme P comportant N blocs Bi de code (i = 1,..., N) constituant des blocs de code représentant des étapes ou opérations à accomplir lors de l'exécution dudit programme P, celui-ci permettant d'effectuer des opérations telles que par exemple une lecture ou une sélection de données dans la carte 10 et lesdits blocs Bi gérant des informations de données et d'adresses.

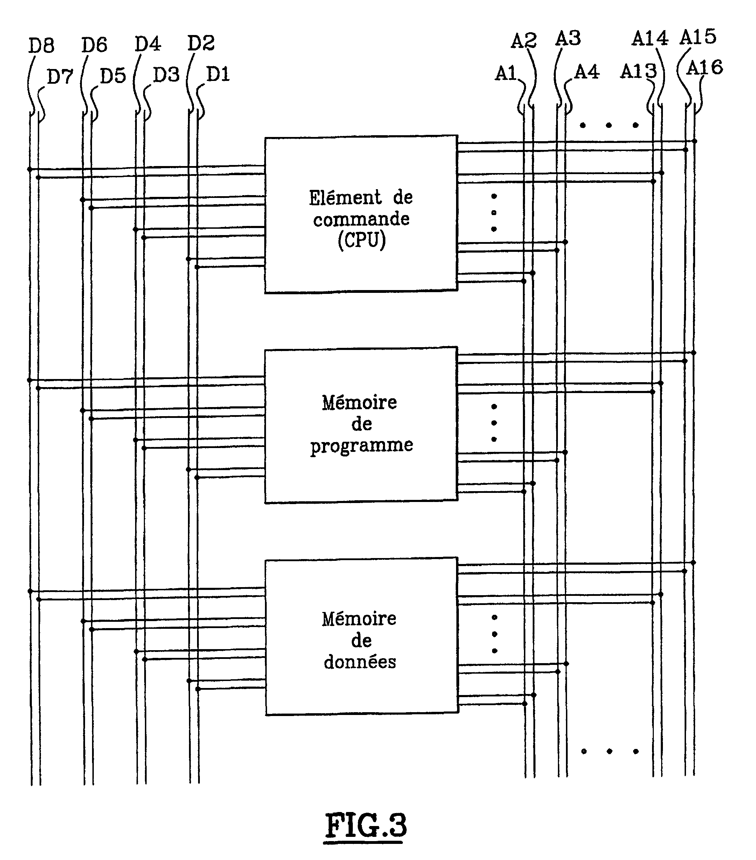

Lors de l'exécution dudit programme P, il y a des échanges d'informations entre les mémoires 14 et 15 et l'élément 11 de commande, qui se font par l'intermédiaire des lignes de bus dudit circuit intégré et qui sont gérés par l'élément 11 de commande de ladite carte 10. Lesdites lignes de bus sont, soit des lignes permettant de transporter des informations d'adresses, soit des lignes permettant de transporter des informations de données. Ainsi que cela est montré à la figure 3. les lignes de bus de données D1, D2, ...D8 et d'adresses A1, A2, ..., A16 sont reliées à chacune des mémoires de données 14 et de programme 15 de ladite zone mémoire 12 ainsi qu'à l'élément 11 de commande (CPU).

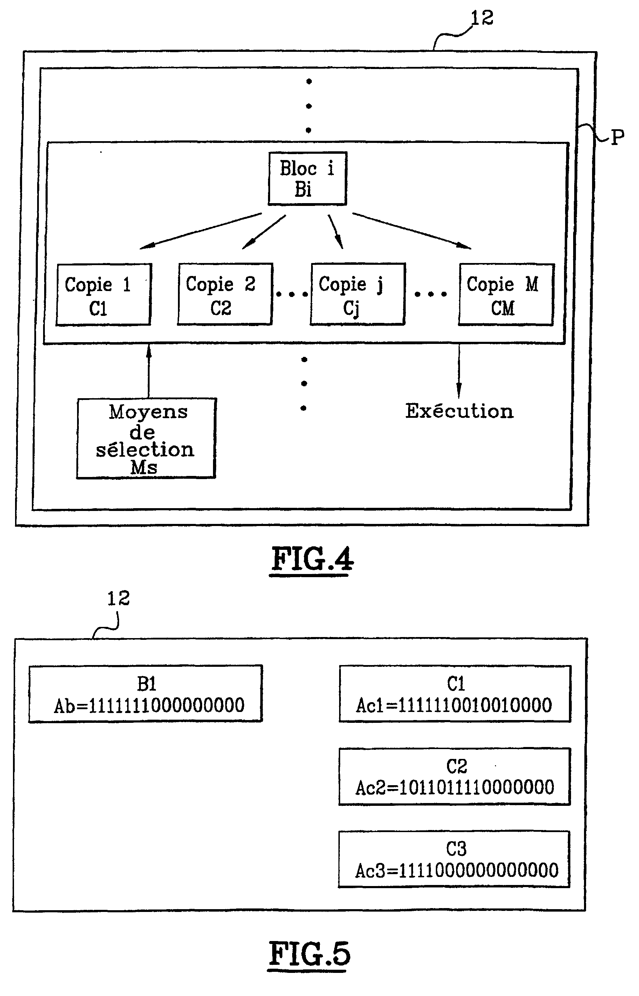

Afin de brouiller l'étude de la signature électrique lors de l'exécution du programme P, exécution qui est signe de l'activité de ladite carte 10, l'invention prévoit que le dispositif comporte M copies Cj (j = 1,..., M) d'un ou plusieurs blocs Bi dans ladite zone mémoire 12, et un moyen de sélection Ms permettant de sélectionner de façon aléatoire une des copies Cj d'un bloc Bi comme copie de bloc à exécuter quand celui-ci doit être exécuté dans ledit programme P. Lors de l'exécution dudit programme P, plusieurs blocs Bi de code vont être exécutés. La figure 4 montre un exemple pour un bloc donné Bi. Pour chaque exécution de ce bloc Bi à exécuter dans ledit programme P et comportant des copies Cj dans la zone mémoire 12, ledit moyen de sélection Ms choisit de façon aléatoire, soit le bloc Bi, soit une de ses copies Cj pour l'exécuter dans le programme P. Les différentes copies Cj ainsi que le bloc Bi étant situés à des valeurs d'adresses différentes, à chaque nouvelle demande d'exécution dudit bloc Bi dans le programme P, les lignes de bus ne transportent pas les mêmes valeurs d'adresses et cela rend ainsi l'analyse de la signature électrique, qui varie suivant les valeurs transitant sur les lignes de bus de la carte 10, beaucoup plus difficile. Plus le dispositif comprend de blocs Bi copiés, plus la signature est difficile à analyser. C'est pour cela que l'invention prévoit des copies Cj pour x blocs Bi 1 ≤ x ≤ N.

La signature électrique varie notamment en fonction des valeurs transitant sur les lignes de bus d'adresses représentées à la figure 3 et plus particulièrement lorsque une ligne de bus transporte l'information 1, cette information consommant un certain courant électrique. Or, si les valeurs d'adresses desdites copies Cj précitées et dudit bloc Bi copié sont équivalentes en consommation électrique (par exemple les valeurs d'adresses 1111100000000000 et 0000111011000000 sont équivalentes en consommation puisqu'elles ont chacune le même nombre de bits à un et à zéro), la signature électrique ne va pas beaucoup changer. Aussi, on choisit les adresses de telle manière que les sommes des valeurs des bits d'au moins deux adresses parmi l'ensemble des adresses d'un bloc Bi copié et de ses M copies Cj soient différentes. En pratique, on a pu constater que, en général, le fait d'avoir 1 bit de différence parmi ces sommes était suffisant pour différencier les diverses consommations électriques desdites valeurs d'adresses et rendre ainsi plus complexe une étude de la signature électrique. L'exemple de la figure 5 représente un bloc B1 avec trois copies C1, C2 et C3 et leurs adresses respectives Ab, Ac1, Ac2 et Ac3. Dans cet exemple, on peut voir que les sommes des bits des valeurs d'adresses Ab, Ac1 et Ac3 sont différentes et, par suite, que lesdites valeurs d'adresses varient en consommation électrique tandis que les sommes des bits des valeurs d'adresses Ab et Ac2 sont équivalentes (leur somme est égale à sept) et que en conséquence leur valeurs d'adresses sont équivalentes en consommation éiectrique.

De même que la signature électrique varie suivant les valeurs transitant sur les lignes de bus d'adresses, la signature électrique varie suivant les valeurs transitant sur les lignes de bus de données représentées à la figure 3.

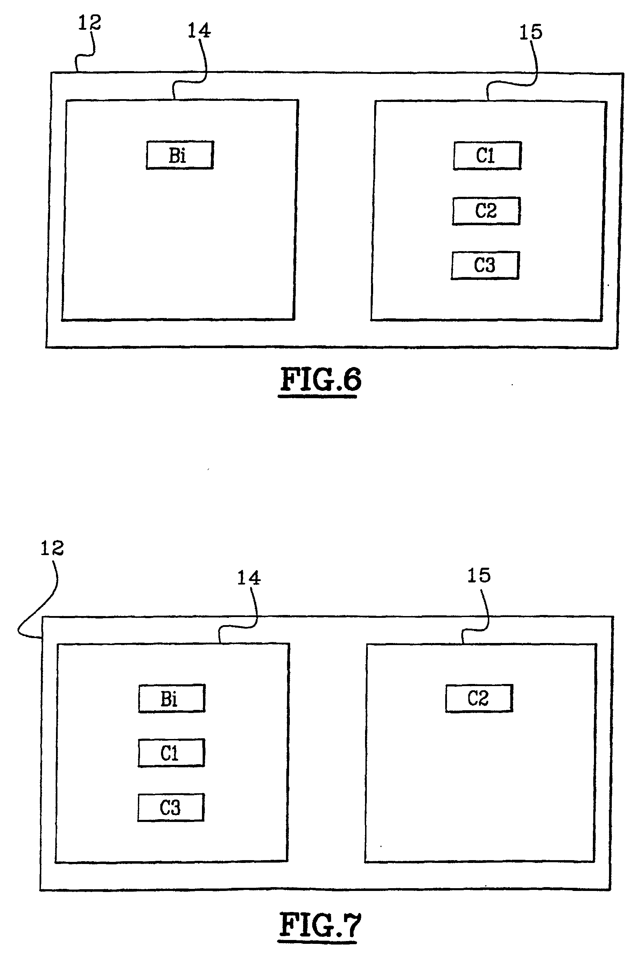

Aussi, on prévoit que parmi l'ensemble des adresses d'un bloc Bi copié et de ses M copies (le bloc Bi comportant des opérations gérant un certain nombre de données), une partie des adresses se situe dans la mémoire 15 de programme et une autre partie des adresses se situe dans la mémoire 14 de données, comme le montrent les exemples des figures 6 et 7. En effet, l'exécution d'une opération, par exemple de lecture ou d'écriture, se situant dans la mémoire 15 de programme ne consomme pas la même quantité de courant que lorsque ladite opération se situe dans la mémoire 14 de données. Lesdites opérations du bloc Bi copié sont considérées, de la part de l'élément 11 de commande de la carte, comme des informations de données transitant sur les lignes de bus de données.

Ainsi, le système précité de copie de blocs dans différentes mémoires, permet de brouiller la signature électrique et on peut comprendre que grâce à ce système couplé avec ce qui a été vu précédemment, la signature électrique sera encore plus difficile à étudier.

Enfin, en plus d'une variation aléatoire en amplitude de la signature électrique due aux différents systèmes du dispositif mis en place et vus précédemment, on prévoit une variation aléatoire en temps de ladite signature. En effet, on prévoit que le dispositif comporte un moyen de commande permettant d'ordonnancer l'exécution des blocs Bi de manière aléatoire. Chaque bloc comporte un ensemble d'opérations relatives à la carte à composants électroniques. Lesdites opérations, lorsqu'elles s'exécutent, font appel à des fonctions qui sont gérées par l'élément 11 de commande de ladite carte. Pour effectuer ces fonctions, l'élément de commande consomme du temps. En général, pour chaque ensemble de fonctions, le temps consommé n'est pas le même, il en va ainsi de même pour chaque ensemble d'opérations. Ainsi, grâce à ce moyen de commande qui permet l'exécution des blocs de manière aléatoire, à chaque nouvelle exécution du programme P, la signature électrique varie en fonction du temps puisque les blocs de code ne s'exécutent pas dans le même ordre et par conséquent, un fraudeur ne peut pas par exemple lancer à plusieurs reprises l'exécution dudit programme P et analyser la signature électrique pour établir des correspondances entre les différentes opérations de traitement et chaque signal ou série de signaux contenus dans la signature électrique. On pourra noter que aucun dispositif annexe n'a été ajouté pour contrer ledit fraudeur.

## Revendications

1. Dispositif à circuit intégré contenant une zone mémoire qui comprend, d'une part, une mémoire de données et une mémoire de programme, et, d'autre part, un programme comportant N blocs Bi -i = 1,..., N- de code, **caractérisé en ce que** ladite zone mémoire comporte M copies Cj -j = 1,..., M- de x blocs Bi (1 ≤ x ≤ N) de code du programme, lesdites copies étant situées à différentes adresses de ladite zone mémoire, et **en ce que** ledit dispositif comprend un moyen de sélection servant à sélectionner de façon aléatoire une copie Cj d'au moins un des x blocs Bi, comme copie de bloc à utiliser lors de l'exécution dudit programme.

2. Dispositif selon la revendication 1, **caractérisé en ce que** les sommes des valeurs des bits d'au moins deux adresses parmi l'ensemble des adresses d'un bloc Bi copié et de ses M copies Cj sont différentes.

3. Dispositif selon l'une des revendications précédentes, **caractérisé en ce que** parmi l'ensemble des adresses d'un bloc Bi copié et de ses M copies, une partie des adresses se situe dans la mémoire de programme et une autre partie des adresses se situe dans la mémoire de données.

4. Dispositif selon l'une des revendications précédentes, **caractérisé en ce qu'**il comporte un moyen de commande permettant d'ordonnancer l'exécution des blocs de manière aléatoire.

5. Procédé de sécurisation d'un dispositif à circuit intégré contenant une zone mémoire qui comprend, d'une part, une mémoire de données et une mémoire de programme, et, d'autre part, un programme comportant N blocs Bi -i =1,..., N-de code, **caractérisé en ce que** ledit procédé comporte les étapes consistant à:
- créer, dans ladite zone mémoire, M copies Cj -j = 1,..., M- de x blocs Bi (1 ≤ x≤ N) de code du programme, lesdites copies étant situées à différentes adresses de ladite zone mémoire,
- sélectionner de façon aléatoire une copie Cj d'au moins un des x blocs Bi, comme copie de bloc à utiliser lors de l'exécution dudit programme.

6. procédé selon la revendication 5, **caractérisé en ce que** ledit procédé consiste, dans une étape supplémentaire à choisir, les sommes des valeurs des bits d'au moins deux adresses parmi l'ensemble des adresses d'un bloc Bi copié et de ses M copies Cj de telle manière qu'elles soient différentes.

7. Procédé selon les revendications 5 ou 6, **caractérisé en ce que** parmi l'ensemble des adresses d'un bloc Bi copié et de ses M copies, une partie des adresses est choisie dans la mémoire de programme et une autre partie des adresses est choisie dans la mémoire de données.

8. Procédé selon les revendications 5, 6 ou 7, **caractérisé en ce que** ledit procédé consiste, dans une étape supplémentaire, à ordonnancer l'exécution des blocs de manière aléatoire.

## Patentansprüche

1. Vorrichtung mit einem integrierten Schaltkreis, die eine Speicherzone mit einerseits einem Datenspeicher und einem Programmspeicher und andererseits einem Programm mit N Codeblöcken Bi (i = 1, ..., N) enthält, **dadurch gekennzeichnet, dass** die besagte Speicherzone M Kopien Cj (j = 1, ..., M) von x Codeblöcken Bi (1 ≤ x ≤ N) des Programms umfasst, wobei sich die besagten Kopien an verschiedenen Adressen der besagten Speicherzone befinden und dass die besagte Vorrichtung ein Auswahlmittel zur zufälligen Auswahl einer Kopie Cj von mindestens einem der x Blöcke Bi als bei der Ausführung des besagten Programms zu benutzende Blockkopie umfasst.

2. Vorrichtung nach Anspruch 1, **dadurch gekennzeichnet, dass** die Summen der Bit-Werte von mindestens zwei Adressen von allen Adressen eines kopierten Blocks Bi und seinen M Kopien Cj verschieden sind.

3. Vorrichtung nach einem der vorausgehenden Ansprüche, **dadurch gekennzeichnet, dass** sich von allen Adressen eines kopierten Blocks Bi und seinen M Kopien ein Teil der Adressen im Programmspeicher und ein anderer Teil der Adressen im Datenspeicher befindet.

4. Vorrichtung nach einem der vorausgehenden Ansprüche, **dadurch gekennzeichnet, dass** sie ein Steuermittel zur Steuerung der zufälligen Ausführung der Blöcke umfasst.

5. Sicherungsverfahren einer Vorrichtung mit integriertem Schaltkreis, die eine Speicherzone mit einerseits einem Datenspeicher und einem Programmspeicher und andererseits einem Programm mit N Codeblöcken Bi (i = 1, ..., N) enthält, **dadurch gekennzeichnet, dass** das besagte Verfahren folgende Schritte umfasst:
- Erstellen in der besagten Speicherzone von M Kopien Cj (j = 1, ..., M) von x Codeblöcken Bi (1 ≤ x ≤ N) des Programms, wobei sich die besagten Kopien an unterschiedlichen Adressen in der besagten Speicherzone befinden.
- zufällige Auswahl einer Kopie Cj von mindestens einem der x Blöcke Bi als für die Ausführung des besagten Programms zu benutzende Blockkopie.

6. Verfahren nach Anspruch 5, **dadurch gekennzeichnet, dass** das besagte Verfahren in einem zusätzlichen Schritt darin besteht, von allen Adressen eines kopierten Blocks Bi und seinen M Kopien Cj die Summen der Bit-Werte von mindestens zwei Adressen so auszuwählen, dass sie unterschiedlich sind.

7. Verfahren nach Anspruch 5 oder 6, **dadurch gekennzeichnet, dass** von allen Adressen eines kopierten Blocks Bi und seinen M Kopien ein Teil der Adressen im Programmspeicher und ein anderer Teil der Adressen im Datenspeicher ausgewählt wird.

8. Verfahren nach den Ansprüchen 5, 6 oder 7, **dadurch gekennzeichnet, dass** das besagte Verfahren in einem zusätzlichen Schritt darin besteht, die Ausführung der Blöcke auf zufällige Weise zu steuern.

## Claims

1. An integrated circuit device containing a memory area that comprises, on the one hand, a data memory and a program memory, and on the other hand, a program having N code blocks Bi -i = 1, ..., N, **characterized in that** said memory area has M replicas Cj -j = 1, ..., M of x program code blocks Bi -1 ≤ x ≤ N-, wherein said replicas reside at different addresses within said memory area, and **in that** said device comprises selection means for randomly selecting one replica Cj of at least one of the x blocks Bi, as a block replica to be used when executing said program.

2. A device according to claim 1, **characterized in that** the sums of bit values of at least two addresses among the set of addresses of one replicated block Bi and its M replicas Cj are different.

3. A device according to any preceding claim, **characterized in that**, among the set of addresses of one replicated block Bi and its M replicas, one address resides within the program memory and another address resides within the data memory.

4. A device according to any preceding claim, **characterized in that** it comprises controller means for randomly scheduling block execution.

5. A method for making secure an integrated circuit device containing a memory area, which comprises, on the one hand, a data memory and a program memory, and on the other hand, a program having N code blocks Bi -i = 1, ..., N, **characterized in that** said method comprises the steps of:
- generating, within said memory area, M replicas Cj -j = 1, ..., M of x program code blocks Bi -1 ≤ x ≤ N-, wherein said replicas reside at different addresses within said memory area, and
- randomly selecting one replica Cj of at least one of the x blocks Bi, as a block replica to be used when executing said program.

6. A method according to claim 5, **characterized in that** said method comprises the additional step of selecting the sums of bit values of at least two addresses among the set of addresses of one replicated block Bi and its M replicas Cj in such a way that they are different.

7. A method according to claims 5 or 6, **characterized in that**, among the set of addresses of a replicated block Bi and its M replicas, an address is selected within the program memory and another address is selected within the data memory.

8. A method according to claims 5, 6 or 7, **characterized in that** said method comprises the additional step of randomly scheduling block execution.
